# Europäisches Patentamt

## European Patent Office

## Office européen des brevets

(11) Veröffentlichungsnummer: **0 113 003**

**B1**

(12) **EUROPÄISCHE PATENTSCHRIFT**

(45) Veröffentlichungstag der Patentschrift:
03.02.88

(51) Int. Cl.⁴: **F 28 F 9/02, F 28 F 9/16**

(21) Anmeldenummer: 83111212.3

(22) Anmeldetag: 10.11.83

(54) Wärmetauscher.

(30) Priorität: 22.12.82 DE 3247502

(43) Veröffentlichungstag der Anmeldung:
11.07.84 Patentblatt 84/28

(45) Bekanntmachung des Hinweises auf die Patenterteilung:
03.02.88 Patentblatt 88/5

(84) Benannte Vertragsstaaten:
DE FR GB IT SE

(56) Entgegenhaltungen:
DE-C-956 820
FR-A-1 069 816
FR-A-2 085 294
FR-A-2 271 531
FR-A-2 371 662
US-A-1 657 027
US-A-3 254 709
US-A-3 428 338

(73) Patentinhaber: Süddeutsche Kühlerfabrik Julius Fr. Behr GmbH & Co. KG, Mauserstrasse 3, D-7000 Stuttgart 30 (DE)

(72) Erfinder: Humpolik, Bohumil, Odenheimstrasse 19, D-7140 Ludwigsburg (DE)
Erfinder: Kluna, Vlastimil, Albstrasse 33, D-7014 Kornwestheim (DE)
Erfinder: Winterer, Wilfried, Manosquer Strasse 24, D-7022 Leinfelden (DE)
Erfinder: Kuchelmeister, Reinhold, Hoher Weg 14, D-7035 Waldenbuch (DE)
Erfinder: Bayer, Jürgen, Albstrasse 23, D-7300 Esslingen 1 (DE)

## Beschreibung

Die Erfindung bezieht sich auf einen Wärmetauscher, der im Oberbegriff des Anspruches 1 angegebenen Gattung.

Aus der GB-A-1 445 598 ist bereits eine Rohr/Rohrboden-Verbindung für Rundrohre eines Wärmetauschers bekannt. Der aus einem Metall bestehende Rohrboden wird mit Durchzügen versehen, in die die Enden der Wärmetauscherrohre gesteckt werden. Anschließend erfolgt durch radiales Aufweiten der Rohrenden eine Preßverbindung, wodurch die Rohrenden im Rohrboden befestigt und abgedichtet sind.

Das bekannte Verfahren ist insbesondere wegen der erforderlichen Materialeigenschaften lediglich bei Verwendung von metallischen Rohrböden möglich. Bei Wärmetauschern mit metallischem Rohrboden ist die Verbindung eines aus Kunststoff bestehenden Wasserkastens mit dem Rohrboden nur durch mechanische Verbindungsmittel möglich, wobei zur Abdichtung ein separates Dichtungsmittel, das üblicherweise in Form von Gummidichtungen besteht, erforderlich ist.

Aus der DE-C-956 820 ist ein Wärmetauscher für die Kühlung von Verbrennungskraftmaschinen bekannt, bei dem der Wasserkasten und der Rohrboden aus Kunststoff bestehen. Der Rohrboden weist auf einer Seite kegelförmige Verdickungen auf, in denen sich Öffnungen zur +Aaufnahme der Enden der Wärmetauscherrohre befinden. Die Rohre des Rohrbündels gind auf der in den Wasserkasten ragenden Seite des Rohrbodens aufgeweitet, so daß sich um die Öffnungen des Rohrbodens herum Ringwülste bilden, auf die Schweißwülste aufgetragen werden. Zusätzlich werden Schweißwülste auf der Unterseite des Rohrbodens an den Rohren aufgebracht. Die Verbindung von Wasserkasten und Rohrboden erfolgt mittels Hochfrequenzschweißens.

Bei dieser bekannten Anordnung hat es sich als nachteilig erwiesen, daß zur Verbindung der Rohre mit dem Rohrboden die Schweißwülste einzeln angefertigt werden müssen. Außerdem kann eine derartige Lösung keine hinreichende Dichtheit gewährleisten. Auch die Verbindung von Wasserkasten und Rohrboden mittels Ultraschallschwingungen führt zu Problemen, auf die nachfolgend noch näher eingegangen wird.

Aus der DE-A-2 125 671 ist ein Verfahren zur Herstellung von Kühlern mit aus Kunststoff bestehenden Rohrböden bekannt. Dabei wird das Kunststoffmaterial der Rohrböden durch Anlegen von Ultraschallschwingungen allmählich zum Schmelzen gebracht und gleichzeitig erfolgt durch Druckeinwirkung auf die Rohre ein Eindringen der Rohre in den Rohrboden. Die Verbindung des Wasserkastens mit dem Rohrboden erfolgt ebenfalls durch Einwirkung von Ultraschallschwingungen auf die aneinanderliegenden Grenzschichten, wodurch diese allmählich zum Schmelzen gebracht und somit miteinander verschweißt werden.

Bei der Ultraschallschweißmethode wird die erforderliche Schmelzwärme durch Grenzflächenreibung erzeugt. Dabei muß die Schwingung senkrecht zur Oberfläche verlaufen, was hinsichtlich der Zuführung der Schwingung je nach Ausgestaltung der zu verbindenden Teile Probleme mit sich bringt. Für das Ultraschall-Schweißverfahren sind daher die Gestaltungsrichtlinien bezüglich der Form der Teile und die Position der Energierichtungsgeber genauestens einzuhalten. Außerdem müssen bei dieser Methode die Toleranzen äußerst klein gehalten werden, damit eine befriedigende Verschweissung überhaupt erfolgen kann. Außerdem hat die Praxis gezeigt, daß das Ultraschallschweißen nur für kleine bis mittelgroße Teile in sinnvoller Weise anwendbar ist. Ferner ist es schwierig, mit der Ultraschallschweißmethode die bei Wärmetauschern erforderliche Festigkeit und Dichtheit unter Druckeinwirkung zu erreichen.

Das Vibrationsschweißen von Kunststoffteilen ist an sich bekannt und beispielsweise in der Zeitschrift "Plastics Engineering", Juli 1976, Seiten 33 - 35, beschrieben. In diesem Stand der Technik sind mehrere Beispiele zur Ausgestaltung der Verbindungsflächen angegeben.

Es ist die Aufgabe der Erfindung, einen Wärmetauscher der im Oberbegriff des Anspruchs 1 bezeichneten Art zu schaffen, bei dem sowohl die Verbindung der Wärmetauscherrohre mit dem Rohrboden die Verbindung des Wasserkastens mit dem Rohrboden auf einfache Weise möglich ist.

Dabei soll die Verbindung eine große mechanische Festigkeit und zuverlässige Dichtheit aufweisen. Außerdem soll der Rohrboden aus Materialersparnis- und Gewichtsgründen möglichst dünn ausgebildet sein.

Diese Aufgabe wird bei einem Wärmetauscher der bezeichneten Art erfindungsgemäß durch die kennzeichnenden Merkmale des Aspruches 1 gelöst. Der erfindungsgemäße Wärmetauscher weist insbesondere die Vorteile auf, daß der Rohrboden und der Wasserkasten bei einfacher Gestaltung der Teile auf einfache Weise aus Kunststoffmaterial herstellbar sind, wobei der Rohrboden trotz seiner geringen Dicke eine für das Einpressen oder Aufweiten der Wärmetauscherrohre im Rohrboden ausreichende Festigkeit aufweist. Die Schweißgratspeicher dienen nicht nur zur Aufnahme geschmolzenen Materials, das seitlich der Verbindungsflächen herausgequetscht wird, sondern auch zur Beeinflussung des Wärmeflusses in die angrenzenden Bereiche des Wasserkastens und/oder Bodens. Der Wasserkasten ist gegenüber dem Rohrboden fest ausgerichtet, weil der Rohrboden an seinen Längsseiten eine Schulter aufweist, die während des Vibrationsschweißens zur Führung des Wasserkastens entlang des Rohrbodens dient.

Ein weiterer Vorteil ist darin zu sehen, daß auch im Wasserkasten angeordnete Trennwände ohne zusätzlichen Aufwand und ohne separate Dichtungsmittel gleichzeitig mit der Randschweißung des Wasserkastens mit dem Rohrboden durch Vibrationsschweißung verbunden werden. Demnach besteht eine bevorzugte Weiterbildung des Erfindungsgegenstandes darin, daß der Wasserkasten eine Trennwand mit einer ebenen Fläche aufweist, die auf einer ebenen Fläche des Rohrbodens oder auf einer ebnen Fläche einer am Rohrboden angeordneten Trennwand liegt und mittels Vibrationsschweißens die Trennwand mit dem Rohrboden bzw. der gegenüberliegenden Trennwand verbunden ist, Für das gleichzeitige Verbinden der Trennwand mit dem Rohrboden ist es unerheblich, ob die Verbindung der Trennwand mit dem Rohrboden in derselben oder in einer anderen Fügeebene angeordnet ist, wie die Flächen zur Verbindung des Wasserkastens mit dem Rohrboden an den Rändern.

Vorzugsweise sind die kegelförmigen Verdickungen in denen die Öffnungen zur Aufnahme der Wärmetauscherrohre angeordnet sind, auf der dem Wärmetauscherblock zugewandten Seite des Rohrbodens angeordnet.

Eine weitere vorteilhafte Ausgestaltung der Erfindung besteht darin, daß die Öffnungen eine oder mehrere in Umfangsrichtung verlaufende Rille bzw. Rillen aufweisen. Diese Rillen tragen einerseits zur Erzeugung mehrer Dichtkanten bei; sie können aber andererseits auch Sammelräume für ein aushärtbares Dichtungsmittel dienen. In ähnlicher Weise können die Enden der Rundrohre an ihrer Mantelfläche in Umfangsrichtung verlaufende Rillen aufweisen. Um das Durchtreten von sogenannter Falschluft zwischen des Rohrboden und der diesem benachbarten Rippe zu verhindern wird vorgeschlagen, daß zwischen zwei Reihen von kegelförmigen Verdickungen ein sich über die gesamte Länge des Rohrbodens erstreckender Steg angeordnet ist, dessen Höhe mindestens gleich der Höhe der Verdickungen ist und an welchem die dem Rohrboden benachbarte Rippe anliegt.

Als besonders geeignete Werkstoffe für den Rohrboden und den Wasserkasten sind vorzugsweise teilkristalline Werkstoffe anzusehen, beispielsweise Polypropylen oder Polyamid.

Einige Ausführungsbeispiele des erfindungsgemäßen Wärmetauschers sind nachstehend anhand der Zeichnung näher erläutert.

In der Zeichnung zeigt:
Figur 1 einen Schnitt durch einen Wasserkasten eines Wärmetauschers,
Figur 2 die Einzelheit Z aus Figur 1 in vergrößertem Maßstab,
Figur 3 die Einzelheit X aus Figur 1 in vergrößertem Maßstab,
Figur 4 die Einzelheit Y aus Figur 1 in vergrößertem Maßstab,
Figur 5 einen eingespannten Wärmetauscher während des Vibrationsschweißvorganges,
Figur 6 eine schematische Darstellung von in zwei Ebenen angeordneten Vibrationsschweißverbindungen,
Figur 7 einen Schnitt durch eine Öffnung des Rohrbodens,
Figur 8 und 9 Ausführungsvarianten zu Figur 8.

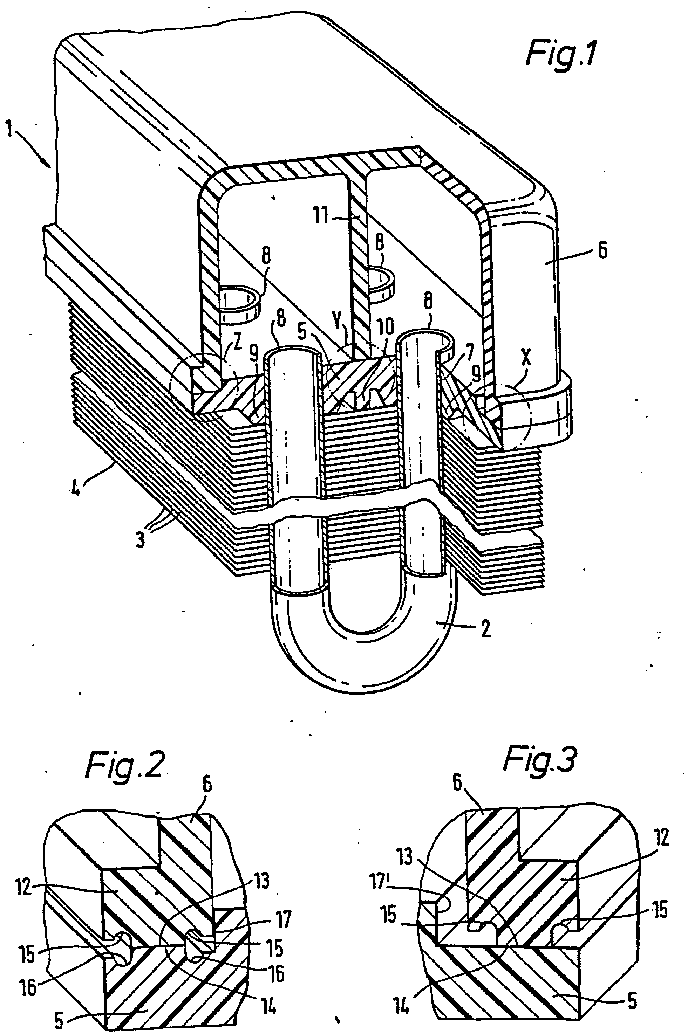

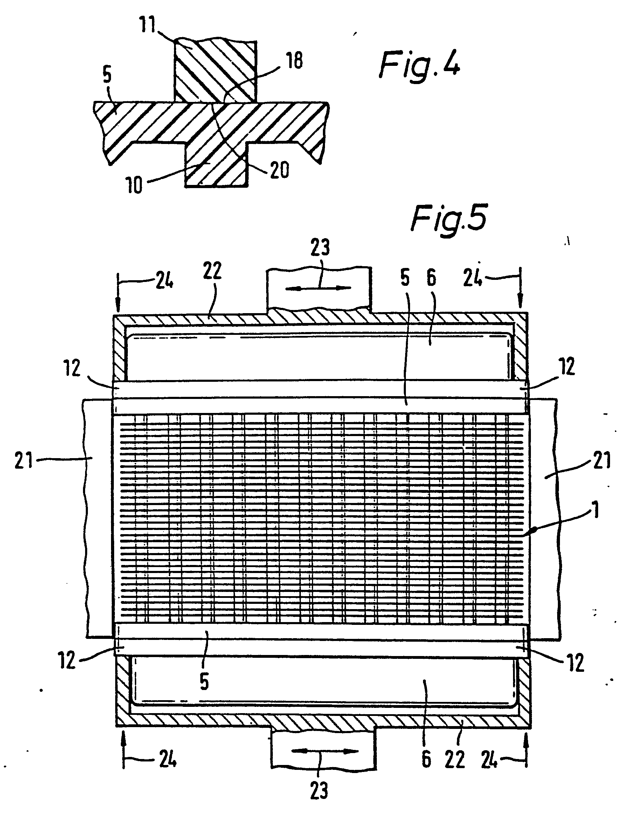

In Figur 1 ist ein Wärmetauscher 1 dargestellt, der aus einen Rohrgabeln 2 und Rippen 3 umfassenden Wärmetauscherblock 4, einem Rohrboden 5 und einen Wasserkasten 6 besteht. Der Rohrboden 5 weist Öffnungen 7 zur Aufnahme von Enden 8 der Rohrgabeln 2 auf, wobei der Rohrboden 5 auf seiner Unterseite die Öffnungen 7 umgebende kegelförmige Verdickungen 9 aufweist. Zwischen den beiden Reihen kegelförmiger Verdickungen 9 befindet sich ein über die gesamte Länge des Rohrbodens 5 reichender Steg 10, an dem die oberste Rippe 3 zur Anlage kommt. Der Boden 5 ist - wie später noch anhand von Figur 2 und 3 näher erläutert wird - an seinem Rand mit einer ebenen Fläche versehen, an welcher der Wasserkasten mit den Boden durch Vibrationsschweißen verbunden ist. Der Wasserkasten 6 weist eine in Längsrichtung verlaufende und sich über die gesamte Länge des Wasserkastens erstreckende Trennwand 11 auf, die ebenfalls durch Vibrationsschweißen mit den Boden 5. verbunden ist. Die Verbindung der Trennwand 11 mit den Boden 5 ist zu Figur 4 näher beschrieben.

In Figur 2 ist die Einzelheit Z aus Figur 1 in vergrößertem Maßstab dargestellt. Es handelt sich dabei um einen Ausschnitt der Verbindungsanordnung an der Längsseite des Wasserkastens 6. Der Wasserkasten 6 weist einen erweiterten Rand 12 auf, der auf einer den Rohrboden 5 zugewandten Seite mit einer ebenen Fläche 13 versehen ist. Die ebene Fläche 13 erstreckt sich entlang des gesamten Randes 12 und liegt auf einer entsprechenden ebenen Fläche 14 am Rand des Rohrbodens 5. An der Außenseite sowie zur Wasserkasteninnenseite werden die ebenen Flächen 13 und 14 durch Rillen 15 und 16, die sich entlang des Randes erstrecken, begrenzt. Die Rillen 15 und 16 dienen einerseits als Schweißgratspeicher und andererseits zur Beeinflussung des Wärmeflusses beim Vibrationsschweißen. Der Rohrboden 5 weist eine Schulter 17 auf, an der der Rand 12 des Wasserkastens 6 anliegt und an dieser längsverschiebbar geführt ist.

In Figur 3 ist die Einzelheit X aus Figur 1 dargestellt, die im Gegensatz zu Figur 2 nicht die Längsseite des Wasserkastens 6, sondern dessen Schmalseite betrifft. Für gleiche Teile wie in Figur 2 stimmen die Bezugzeichen überein. Wie aus Figur 3 ersichtlich ist, weist an der Schmalseite des Wasserkastens 6 eine Schulter 17' des Rohrbodens 5 einen Abstand zum Rand 12 des Wasserkastens 6 auf, damit eine die Vibrationsschweißung ermöglichende Bewegung des Wasserkastens 6 gegenüber dem Rohrboden 5 gegeben ist. Außerdem weist an der Schmalseite der Rohrboden 5 eine nicht von Rillen 18 begrenzte ebene Fläche 14 auf; er könnte jedoch zur Innenseite des Wasserkastens hin eine Rille aufweisen, die wegen der quer zu den Rillen verlaufenden Vibrationsbewegung mindestens um den Betrag der Amplitude in Richtung auf die Schulter 17' versetzt sein muß.

Figur 4 zeigt die Einzelheit Y in Figur 1. Es ist darin die Verbindung der Trennwand 11 mit dem Rohrboden 5 dargestellt, wobei die Trennwand 11 an ihrer Unterseite eine ebene Verbindungsfläche 18 aufweist, die auf einer ebenen Fläche 20 des Rohrbodens 5 liegt.

In Figur 5 ist ein Wärmetauscher 1 dargestellt, der in eine Spannvorrichtung 21 eingespannt ist, wobei die Schmalseiten der Rohrböden 5 von den Elementen der Spannvorrichtung 21 beaufschlagt werden. Jeder der Wasserkästen 8 wird von einer haubenartigen Vorrichtung 22 derart aufgenommen, daß die Wasserkästen 6 die Vibrationsbewegung gemäß den Pfeilen 23 möglichst ungedämpft mitmachen, wobei gleichzeitig eine Anpreßkraft in Richtung der Pfeile 24 auf die Ränder 12 der Wasserkästen 6 ausgeübt wird. Die Frequenz der Schwingung beträgt ca. 100 Hz und die Amplitude ca. 2 - 4 mm. Die zum Herstellen der Schweißverbindung benötigte Zeit wird unter anderem auch von den Werkstoffeigenschaften beeinflußt. Für das Vibrationsschweißverfahren sind vorzugsweise teilkristalline Werkstoffe geeignet, von denen hier beispielsweise Polypropylen sowie Polyamid zu nennen sind. Vorzugsweise ist der Werkstoff der beiden zu verbindenden Teile gleich.

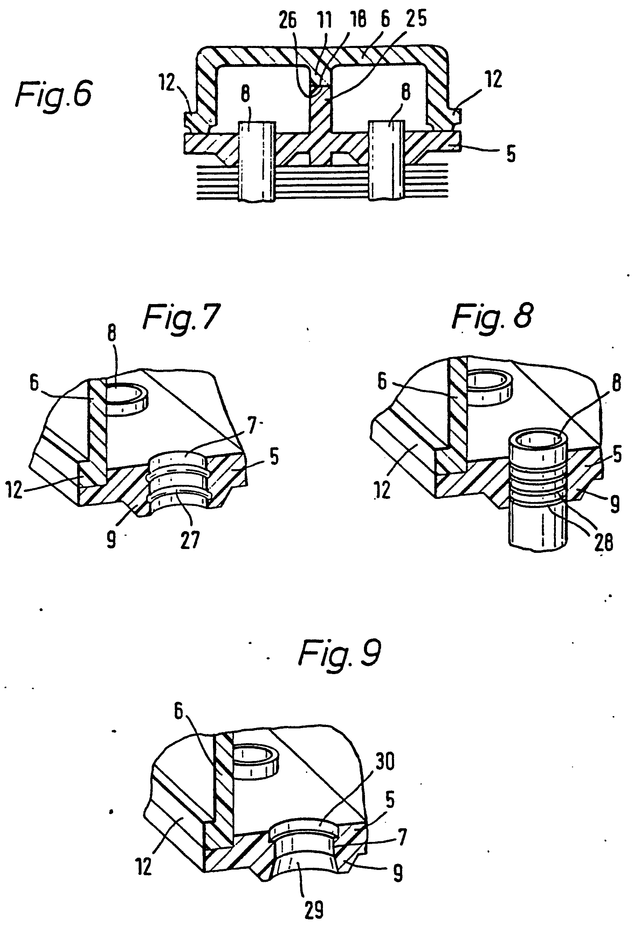

In Figur 6 ist ein mittels Vibrationsschweißung befestigter Wasserkasten 6 dargestellt, wobei die Schweißung in zwei unterschiedlichen Ebenen erfolgte. Dabei entspricht die Verbindung des Randes 12 des Wasserkastens 6 mit dem Rohrboden 5 den Ausführungen, wie sie beispielsweise zu Figur 2 oder 3 beschrieben sind. Zwischen den Reihen der Rohrenden 8 weist der Rohrboden 5 eine nach oben stehende, auf die am Wasserkasten 6 angeformte Trennwand 11 gerichtete Trennwand 25 auf, deren obere Begrenzungsfläche 26 mit der Fläche 18 der Trennwand 11 in Verbindung steht. Die Schweißverbindung im Bereich der Flächen 18 und 26 befindet sich somit in einer anderen Ebene, als die am Rand 12 des Wasserkastens vorhandene Verbindung mit dem Rohrboden 5.

In Figur 7 ist der Schnitt durch eine Öffnung im Rohrboden 5 zur Aufnahme der Wärmetauscherrohre dargestellt. Aus dieser Ansicht ist ersichtlich, daß in der Wandung der Öffnung 7 zwei in Umfangsrichtung verlaufende Rillen 27 angeordnet sind. Beim Aufweiten der Rohre wird das Rohrmaterial teilweise in die Nuten 27 gedrückt, wodurch sich eine erhöhte mechanische Festigkeit und eine bessere Abdichtung der Verbindung zwischen dem Rohr und dem Rohrboden ergibt.

In Figur 8 ist dargestellt, daß an Stelle der Rillen 27 in der Öffnung 7 an der Mantelfläche des Rohres in Umfangsrichtung verlaufende Rillen 28 vorhanden sind, die zur Aufnahme eines Dichtmittels dienen. Als Dichtmittel ist insbesondere ein aushärtbar Kunstharz geeignet.

Figur 9 zeigt eine ähnliche Anordnung wie Figur 7. Es ist in Figur 9 jedoch die Öffnung 7 an ihrer Unterseite mit einem Anlaufkonus 29 und an ihrem der Wasserkasteninnenseite zugewandten Ende mit einer Stufe 30 versehen. Durch die Stufe 30 ergibt sich ein erweiterter Durchmesser der Öffnung 7. Der Anlaufkonus 29 erleichtert das Einführen der Rohre, insbesondere wenn die Rohre durch Einpressen in axialer Richtung am Rohrboden 5 befestigt werden sollen. Durch die Stufe 30 ergibt sich eine zusätzliche Abdichtungskante, da hinter der Schulter 30 eine Aufweitung der Rohre erfolgt, entweder mittels eines Werkzeuges oder beim axialen Einpressen aufgrund der Federeigenschaft des Rohrmaterials.

**Patentansprüche**

1. Wärmetauscher (1), bestehend aus einen eine Vielzahl von Rohren (2) und quer zu diesen angeordneten Rippen (3) umfassenden Wärmetauscherblock (4) und mindestens einem jeweils aus Kunststoff bestehenden Rohrboden (5) und Wasserkasten (6), wobei der Wasserkasten (6) an Rohrboden (5) flüssigkeitsdicht befestigt ist und der Rohrboden (5) auf einer Seite kegelförmige Verdickungen (9) aufweist, in denen sich Öffnungen (7) zur Aufnahme der Enden (8) der Rohre befinden, und wobei der Rohrboden (5) in seinem Randbereich eine durchgehende ebene Fläche (14) aufweist und der mit dieser verbundene Rand (12) des Wasserkastens (6) ebenfalls durchgehend eben ist dadurch gekennzeichnet, daß die Enden (8) der Rohre mittels Aufweitens ihres innerhalb des Rohrbodens (5) befindlichen Bereichs in radialer Richtung oder Einpressens in axialer Richtung am Rohrboden (5) befestigt sind und der Rohrboden (5) mit dem Wasserkasten (6) mittels Vibrationsschweißens an den ebenen Flächen (13, 14) verbunden ist, daß entlang einer oder mehrerer dieser Flächen (13, 14) mindestens auf einer Seite als Schweißgratspeicher dienende Rillen (15, 16) vorgesehen sind und der Rohrboden (5) an seinen Längsseiten eine Schulter (17) aufweist, die während des Vibrationsschweißens zur Führung des Wasserkastens (6) entlang des Rohrbodens (5) dient.

2. Wärmetauscher nach Anspruch 1, dadurch gekennzeichnet, daß der Wasserkasten (6) eine sich in beliebiger Richtung erstreckende Trennwand (11) mit einer ebenen Fläche (18) aufweist, die auf einer ebenen Fläche (20, 26) des Rohrbodens (5) oder auf einer ebenen Fläche (26) einer am Rohrboden (5) angeordneten Trennwand (25) liegt und mittels Vibrationsschweißens die Trennwand (11) mit dem Rohrboden (5) bzw. dessen Trennwand (25) verbunden ist.

3. Wärmetauscher nach Anspruch 2, _dadurch gekennzeichnet_, daß die Flächen (18, 20) zur Verbindung der Trennwand (11) mit dem Rohrboden (5) mindestens annähernd in derselben Fügeebene angeordnet sind, wie die Flächen (13, 14) zur Verbindung des Wasserkastens (6) mit dem Rohrboden (5) an den Rändern (12).

4. Wärmetauscher nach Anspruch 2, _dadurch gekennzeichnet_, daß die Flächen (18, 26) zur Verbindung der Trennwand (11) des Wasserkastens (6) mit der Trennwand (25) des Rohrbodens (5) in einer wesentlich anderen Fügeebene angeordnet sind, als die Flächen (13, 14) zur Verbindung des Wasserkastens (6) mit dem Rohrboden (5) an den Rändern (12).

5. Wärmetauscher nach Anspruch 1, _dadurch gekennzeichnet_, daß die kegelförmigen Verdickungen (9) auf der dem Wärmetauscherblock (4) zugewandten Seite des Rohrbodens (5) angeordnet sind.

6. Wärmetauscher nach einem der vorhergehenden Ansprüche, _dadurch gekennzeichnet_, daß die Öffnungen (7) an ihrer Wandung mindestens eine in Umfangsrichtung verlaufende Rille (27) aufweisen.

7. Wärmetauscher nach einem der Ansprüche 1 - 5, _dadurch gekennzeichnet_, daß die Öffnungen (7) an ihrem dem Wärmetauscherblock (4) zugewandten Ende einen Anlaufkonus (29) und auf der dem Wasserkasten (6) zugewandten Ende eine die Öffnung (7) erweiternde Stufe (30) aufweisen.

8. Wärmetauscher nach einem der Ansprüche 1 - 5, _dadurch gekennzeichnet_, daß die Enden (6) der Rohre an ihrer Mantelfläche in Umfangsrichtung verlaufende Rillen (28) aufweisen.

9. Wärmetauscher nach Anspruch 5, _dadurch gekennzeichnet_, daß zwischen zwei Reihen von kegelförmigen Verdickungen (9) ein sich über die gesamte Länge des Rohrbodens (5) erstreckender Steg (10) angeordnet ist, dessen Höhe mindestens gleich der Höhe der kegelförmigen Verdickungen (9) ist.

10. Wärmetauscher nach Anspruch 1, _dadurch gekennzeichnet_, daß der Rohrboden (5) und der Wasserkasten (6) vorzugsweise aus einem teilkristallinen Werkstoff, beispielsweise Polypropylen oder Polyamid bestehen.

**Claims**

1. Heat exchanger (1) consisting of a heat exchanger block (4) comprising a plurality of tubes (2) and fins (3) disposed transversely of these latter, and at least one tube plate (5) and water tank (6) consisting in both cases of synthetic plastics material, the water tank (6) being fixed in fluidtight fashion on the tube plate (5), the tube plate (5) having on one side conical thickened portions (9) in which there are apertures (7) to receive the ends (8) of the tubes, the tube plate (5) having in its marginal zone a continuous flat surface (14) while the edge (12) of the water tank (6) which is connected thereto is likewise continuously plane, characterised in that the ends (8) of the tubes are fixed to the tube plate (5) by a widening out in a radial direction of that portion of them which is located within the tube plate (5), or by the tubes being pressed into the tube plate in an axial direction, and in that the tube plate (5) is connected to the water tank (6) by vibration welding along the flat surfaces (13, 14) and in that along one or a plurality of these surfaces (13, 14) there are on one side at least grooves (15, 16) which serve as welding burr stores, the tube plate (5) having on its long sides a shoulder (17) which serves to guide the water tank (6) along the tube plate (5) during the vibration welding process.

2. Heat exchanger according to Claim 1, characterised in that the water tank (6) has, extending in any desired direction, a partition (11) with a flat surface (18) which rests on a flat surface (20, 26) of the tube plate (5) or on a flat surface (26) of a partition (25) disposed on the tube plate (5), vibration welding being used to connect the partition (11) to the tube plate (5) or its partition (25).

3. Heat exchanger according to Claim 2, characterised in that the surfaces (18, 20) are, for connection of the partition (11) to the tube plate (5), disposed at least approximately in the same jointing plane as the surfaces (13, 14) for connecting the edges (12) of the water tank (6) to the tube plate (5).

4. Heat exchanger according to Claim 2, characterised in that the surfaces (18, 26) for connecting the partition (11) of the water tank (6) to the partition (25) of the tube plate (5) are disposed in a substantially different plane than the surfaces (13, 14) for connecting the edges (12) of the water tank (6) to the tube plate (5).

5. Heat exchanger according to Claim 1, characterised in that the conical thickened portions (9) are disposed on that side of the tube plate (5) which is towards the heat exchanger block (4).

6. Heat exchanger according to one of the preceding Claims, characterised in that on the walls of the apertures (7) there is at least one groove (27) extending in a peripheral direction.

7. Heat exchanger according to one of Claims 1 to 5, characterised in that the apertures (7) have a starting cone (29) at their end which is towards the heat exchanger block (4) and a step (30) which widens out the aperture (7) at their end which is towards the water tank (6).

8. Heat exchanger according to one of Claims 1 to 5, characterised in that the ends (8) of the tubes have grooves (28) which extend in a peripheral direction around their outer shell.

9. Heat exchanger according to Claim 5, characterised in that between two rows of conical thickened portions (9) and extending over the entire length of the tube plate (5) there is a web (10), the height of which is at least equal to the height of the conical thickened portions (9).

10. Heat exchanger according to Claim 1, characterised in that the tube plate (5) and the water tank (6) consist preferably of a partly crystalline material, for instance polypropylene or polyamide.

## Revendications

1. Echangeur de chaleur (1), se composant d'un bloc d'échangeur de chaleur (4) comportant un grand nombre de tubes (2) et d'ailettes (3) disposées perpendiculairement à ceux-ci, et d'au moins un collecteur d'eau (6) et d'un fond à tubes (5) se composant de matière plastique, le collecteur d'eau (6) étant fixé de façon étanche aux liquides sur le fond (5) et ce fond (5) comportant d'un côté des surépaisseurs de forme conique (9), dans lesquelles sont ménagées les ouvertures (7) destinées à recevoir les extrémités (8) des tubes, et le fond (5) comportant dans sa zone marginale une surface plane continue et le bord (12) du collecteur d'eau, relié à cette surface, étant également plan et continu, caractérisé en ce que les extrémités (8) des tubes sont fixées dans le fond (5) par expansion de leur zone située à l'intérieur du fond (5) dans une direction radiale ou bien par compression dans une direction axiale, en ce que le fond (5) est relié au collecteur d'eau (6) par soudage par vibrations sur les surfaces planes (13, 14), en ce qu'il est prévu le long d'une ou plusieurs desdites surfaces (13, 14) au moins des rainures (15, 16) servant d'un côté d'accumulateur de déchets de soudure et en ce que le fond (5) comporte sur ses côtés longs un épaulement (17) qui, pendant le soudage par vibrations, sert au guidage du collecteur d'eau (6) le long du fond (5).

2. Echangeur de chaleur selon la revendication 1, caractérisé en ce que le collecteur d'eau (6) comporte une paroi séparatrice (11), s'étendant dans une direction quelconque, pourvue d'une surface plane (18) qui s'applique contre une surface plane (20, 26) du fond (5) ou bien contre une surface plane (26) d'une paroi séparatrice (25) disposée sur le fond (5) et la paroi séparatrice (11) est reliée par soudage par vibrations avec le fond (5) ou avec sa paroi séparatrice (25).

3. Echangeur de chaleur selon la revendication 2, caractérisé en ce que les surfaces (18, 20) sont disposées, en vue d'une liaison de la paroi séparatrice (11) avec le fond (5), au moins approximativement dans le même plan de jonction que les surfaces (13, 14) servant à la liaison du collecteur d'eau (6) avec le fond (5) sur les bords (12).

4. Echangeur de chaleur selon la revendication 2, caractérisé en ce que les surfaces (18, 26) sont disposées en vue d'une paroi séparatrice (11) du collecteur d'eau (6) avec la paroi séparatrice (25) du fond (5), pratiquement dans un autre plan de jonction que les surfaces (13, 14) servant à la liaison du collecteur d'eau (6) avec le fond (5) sur les bords (12).

5. Echangeur de chaleur selon la revendication 1, caractérisé en ce que les surépaisseurs (9) de forme conique sont disposées sur le côté du fond (5) qui est dirigé vers le bloc d'échangeur de chaleur (4).

6. Echangeur de chaleur selon une des revendications précédentes, caractérisé en ce que les ouvertures (7) comportent sur leur paroi au moins une rainure (27) orientée dans une direction périphérique.

7. Echangeur de chaleur selon une des revendications 1 à 5, caractérisé en ce que les ouvertures (7) comportent, à leur extrémité dirigée vers le bloc d'échangeur de chaleur (4), un cône d'entrée (29) et, à leur extrémité dirigée vers le collecteur d'eau (6), un gradin (30) élargissant l'ouverture (7).

8. Echangeur de chaleur selon une des revendications 1 à 5, caractérisé en ce que les extrémités (8) des tubes comportent sur leur surface périphérique des rainures (28) orientées dans une direction périphérique.

9. Echangeur de chaleur selon la revendication 5, caractérisé en ce qu'il est prévu entre deux rangées de surépaisseurs de forme conique (9) une nervure (10) s'étendant sur toute la longueur du fond à tubes (5) et dont la hauteur est au moins égale à la hauteur des surépaisseurs de forme conique (9).

10. Echangeur de chaleur selon la revendication 1, caractérisé en ce que le fond à tubes (5) et le collecteur d'eau (6) sont de préférence formés d'un matériau partiellement cristallin, par exemple du polypropylène ou un polyamide.

0 113 003

*Fig.1*

*Fig.2*

*Fig.3*

Fig.4

Fig.5

**Fig.6**

**Fig.7**

**Fig. 8**

**Fig. 9**